Europäisches Patentamt

European Patent Office

Office européen des brevets

(19)

(11) Publication number: **0 072 228 B2**

(12) # NEW EUROPEAN PATENT SPECIFICATION

(45) Date of publication of the new patent specification : **13.02.91 Bulletin 91/07**

(51) Int. Cl.[5] : **F16J 1/02, F16J 1/08**

(21) Application number : **82304176.9**

(22) Date of filing : **09.08.82**

(54) Pistons.

The file contains technical information submitted after the application was filed and not included in this specification

(30) Priority : **11.08.81 GB 8124473**
**23.03.82 GB 8208438**

(43) Date of publication of application :
**16.02.83 Bulletin 83/07**

(45) Publication of the grant of the patent :
**15.10.86 Bulletin 86/42**

(45) Mention of the opposition decision :
**13.02.91 Bulletin 91/07**

(84) Designated Contracting States :
**DE NL SE**

(56) References cited :
**DE-A- 2 446 870**
**DE-C- 928 611**
**FR-A- 724 226**
**FR-E- 15 585**

(56) References cited :
**GB-A- 967 767**
**GB-A- 1 504 019**
**US-A- 3 505 934**
**US-A- 3 721 163**
**US-A- 4 178 899**
**Kfz-Technik Heft 12/76, pages 364-367**
**Kfz-Technik Heft 8/71 - Entwicklung eines neuartigen Graugusskolbens für Fahrzeug-dieselmotoren VEB IFA Motorenwerke Nordhausen**

(73) Proprietor : **AE PLC**
**Cawston House Cawston**
**Rugby Warwickshire CV22 7SB (GB)**

(72) Inventor : **Collyear, John Gowen**
**Barfields**
**Stockton Rugby Warwickshire (GB)**
Inventor : **Parker, David Alec**
**Orchard Bungalow**
**Broadwell Rugby Warwickshire (GB)**

(74) Representative : **Knott, Stephen Gilbert et al**
**MATHISEN, MACARA & CO. The Coach House**
**6-8 Swakeleys Road**
**Ickenham Uxbridge Middlesex UB10 8BZ (GB)**

EP 0 072 228 B2

Jouve, 18, rue Saint-Denis, 75001 PARIS

## Description

This invention relates to pistons for engines or motors of the kind comprising a crown and a gudgeon pin bore.

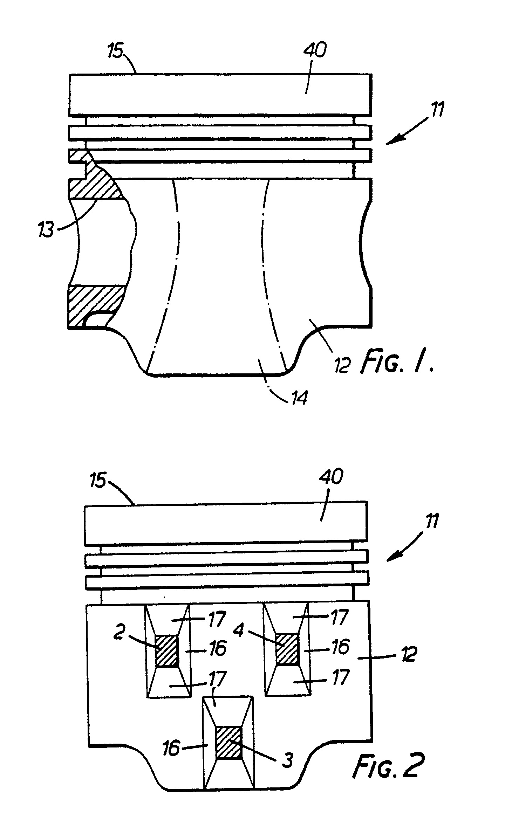

The following is a more detailed description of a known standard piston, with reference to Figure 1 of the accompanying drawings which is a side elevation of a known standard piston.

The known piston 11 has a ring belt 40, a crown 15, a skirt 12 and a gudgeon pin bore 13 extending through the piston normal to the piston axis. The skirt 12 is continuous and is usually slightly oval in cross-section. The skirt 12 of the piston performs no gas sealing function. Gas and oil sealing are provided by piston rings fitted into circumferential grooves in the crown of the piston.

In use, a connecting rod (not shown) is pivotally connected to the piston 11 by a gudgeon pin (not shown) extending through the bore 13. Since the connecting rod does not, in general, act along the piston axis, there is a varying lateral thrust force acting on the piston 11 which urges either a major or minor thrust portion of the skirt towards the associated cylinder during the working cycle. These thrust portions are on opposite sides of a plane including the axis of the gudgeon pin bore and the piston axis.

The whole circumferential extent of the skirt is thus not in contact with the associated cylinder or liner during reciprocation but only those thrust portions of the skirt which lie about the intersection of the skirt with a thrust plane including the piston axis and normal to the axis of the gudgeon pin bore. Since the lateral thrust force varies during reciprocation, the part of these thrust portions in contact with the cylinder or liner at any instant will also vary with time. In general, however, the part of a piston in instantaneous contact with the cylinder or liner will be within an area 14 commonly known as the bedding or contact area which is thus the envelope of all the instantaneous areas of contact. This bedding area may be larger on the major thrust portion of the piston, which contacts the cylinder or liner with the greater force during the expansion stroke, than on the opposite minor thrust portion which contacts the cylinder or liner with the greater force during the compression stroke.

The precise shape of the contact area will vary from piston to piston although it has been found that in general the contact area does not extend more than 30° to either side of the intersection of the thrust plane with the skirt. It has also been found that for a piston having a nominal diameter D and a skirt length of $\pi$ 2D/3, the contact area is approximately $\pi$ D²/9. Such a piston is hereinafter referred to as a "standard piston" and such a contact area as a "standard contact area".

The sliding contact between the skirt and the cylinder or liner in such a standard piston, must be lubricated hydrodynamically by an oil film if engine seizure is not to occur. The friction force (F) between the piston and the cylinder or liner as a result of this lubricated contact is given by the following relationship :

$$F \alpha \sqrt{W \eta U}\ A \qquad (1)$$

The minimum oil film thickness ($h_o$) is given, to a good approximation by

$$h_o \alpha \frac{\sqrt{B\ A \eta u}}{W} \qquad (2)$$

where
W = load
$\eta$ = lubricant viscosity
U = sliding velocity
A = contact area over which the oil film extends
B = circumferential dimension of contact area.

Contact between the thrust portions of the skirt and the associated cylinder or liner causes a high proportion of the friction losses, for example, 20% of the total engine friction losses (corresponding to about 8% of the mechanical output), which in turn reduces fuel economy. Thus a reduction in friction of, say, 25% between the skirt and the cylinder or cylinder wall can provide an additional mechanical output of about 2%, thereby in this example reducing the fuel required for a given duty by just under 2%.

The relationship (1) implies that for a given load viscosity and velocity, the frictional force can be reduced by reducing the area of contact. This is clearly desirable since, as mentioned above, some of the engine power is consumed in overcoming this friction.

However, a reduction in contact area from relationship (2), also reduces the thickness of the oil film

2

between the skirt and the cylinder or liner. Only a limited reduction in this thickness can be tolerated because when the thickness of the oil film is less than the height of asperities on the surface of the skirt and the cylinder or liner there will be metal-metal-metal contact and the frictional forces will rapidly rise leading to damage and eventual seizure of the engine.

In view of the potentially severe consequences of a breakdown in the oil film, it is essential that such an oil film is maintained between the skirt and the associated cylinder or liner throughout the cycle of operation of the piston. For this reason, previous proposals for the lubrication of piston skirts have been concerned with the maximisation of $h_o$ (rather than the minimising of F). This maximisation of $h_o$ has been achieved by providing an oil film over the whole contact area of the piston so maximising A and B in relationship (2) and thus ensuring an oil film of adequate thickness.

In GB-A-1504019, for example, the requirement is identified for a hydrodynamic lubricant film throughout the periphery of the skirt. In order to achieve such a continuous film, oil dragging grooves are provided with an electro-deposited layer which forms the required oil film over the surface of the piston skirt. Other proposals which operate on the same principle are shown in US-A-3721163, DE-A-2446870 and FR-E-15585. Thus, the arrangements of these specifications maximise $h_o$ in relationship (2) by maximising A and B, so preventing mixed or boundary lubrication. However, such a continuous oil film also maximises F, from relationship (1).

Since the teaching of, for example GB-A-1504019 is that a hydrodynamic lubricant film must be provided over the whole of the skirt surface, attempts to reduce the frictional forces between the piston and the associated cylinder have been directed to the use of materials which have a low coefficient of sliding friction when in touching contact with the associated cylinder or liner. An example of this is shown in FR-A-724226 where cork inserts are located on the skirt surface and contact the cylinder or liner. Another example is shown in US-A-3505934, where the inserts are of a temperature resisting anti-friction plastic such as Teflon (trade name). Such inserts achieve the reduction of friction by direct and unlubricated contact between the inserts and the associated cylinder or liner to obtain the benefits of the low coefficient of friction materials. While a reduction in frictional forces is achieved in this way, the direct contact necessarily means that the inserts have only a limited life and thus such pistons find application largely in engines for racing vehicles where only a limited piston life is acceptable.

The publication "Kraftfahrzeugtechnik" of 12th December 1976 suggests, on page 365 the division of the skirt into two bearing surfaces formed by upper and lower inserts carried by the skirt, in order to reduce piston skirt friction. The inserts are formed separately from the skirt and are axially spaced and circumferentially co-extensive, with their upper and lower edges connected to the skirt by radially extending walls.

Thus, an object of the invention is to reduce viscous losses caused by a piston in operation while maintaining an adequate oil film.

According to a first aspect of the invention there is provided a piston for an internal combustion engine of the kind comprising a crown, a gudgeon pin bore, a ring band extending around the crown and including compression and oil control rings, two skirt portions lying on opposite sides of a plane including the piston axis and the gudgeon pin bore axis, and at least one bearing surface provided on each skirt portion, spaced radially outwardly from said surface, and portions on said at least one bearing surface for forming a lubricating film on said at least one bearing surface characterized in that said at least one bearing surface is formed with said skirt portion and is surrounded by the associated skirt portion, said radial outward spacing being less than 125 microns, said portions being hydrodynamic ramps having a ramp angle of less than 1.5° extending between the skirt and said at least one bearing surface to maintain a pressurized oil film between said at least one bearing surface and the associated cylinder, so that sliding contact between the skirt and the associated cylinder is confined to said at least one bearing surface.

According to the second aspect of the invention, there is provided a piston for an internal combustion engine of the kind comprising a crown, a gudgeon pin bore, a ring band extending around the crown and including compression and oil control rings, two skirt portions lying on opposite sides of a plane including the piston axis and the gudgeon pin bore axis and at least one bearing surface provided on each skirt portion spaced radially outwardly from said surface and including portions for forming a lubricating film on said at least one bearing surface characterized in that at least three bearing surfaces are formed with each skirt portion, two of said at least three bearing surfaces being towards the piston crown and being spaced, while at least one remaining bearing surface is towards the lower edge of the skirt opposite the space between the crown end surfaces, said at least three bearing surfaces being spaced radially outwardly of, and surrounded by, the associated skirt portion, there being provided hydrodynamic ramps extending between the skirt and each said bearing surface to maintain a pressurized oil film between said at least three bearing surfaces and the associated cylinder, so that sliding contact between the skirt and the associated cylinder is confined to said at least three bearing surfaces.

In this way, the viscous losses giving rise to frictional forces are confined to the at least one bearing surface and, because there is no oil film between the surrounding skirt and the associated cylinder or liner, there are no losses in this region. Thus, the frictional forces are substantially reduced. However, the provision of the ramps ensures that the at least one bearing surface is continuously supplied with lubricant to ensure hydrodynamic lubrication during reciprocation of the piston, so that the increased pressure caused by the reduced contact area do not disperse the oil film.

The following is a more detailed description of some embodiments of the invention, by way of example, reference being made to the accompanying drawings, in which :

Figure 2 is a side elevation of a first form of piston for a combustion engine or motor ;

Figure 3 is a schematic cross-section through a bearing surface of the piston of Figure 2 in a plane including the piston axis ;

Figure 4 is a similar view to Figure 3 but showing a first alternative form of bearing surface ;

Figure 5 is a similar view to Figure 4 but showing a second alternative form of bearing surface ;

Figure 6 shows graphically the variation of power output and specific fuel consumption with engine speed for an engine fitted with pistons as shown in Figure 2 (broken lines) and Figure 7 (chain dotted line) in comparison with a standard piston (continuous line) ;

Figure 7 is a side elevation of a second form of piston for a combustion engine or a motor ;

Figure 8 is a side elevation of a third form of piston for a combustion engine or a motor ;

Figure 9 is a side elevation of a fourth form of piston for combustion engine or a motor.

In the embodiments of the invention now to be described, parts common to Figure 1 and Figures 2, 3, 4, 5, 7, 8 and 9 will be given the same reference numerals and will not be described in detail.

Referring first to Figure 2, the first piston has six discrete raised bearing surfaces on the skirt 15 for sliding contact with an associated cylinder or liner. The bearing surfaces are arranged in similar groups of three on either side of a plane containing the piston axis and the gudgeon pin axis. Figure 2 shows one group of bearing surfaces 2, 3 and 4 and it will be understood that the other group are similarly arranged. Two bearing surfaces 2 and 4 are circumferentially aligned with one another, are nearer to the crown 5 of the piston and are equidistantly spaced on opposite sides of the intersection of the skirt 15 with a plane including the piston axis and normal to the axis of the gudgeon pin hole 13. The other bearing surface 3 is nearer to the lower end of the piston skirt and is symmetrically disposed about said intersection so that this lower surface 3 lies opposite the space between the crown end surfaces 2 and 4. Each surface 2, 3, 4 is of the same rectangular shape with two circumferentially extending edges and two axially extending edges. The outer axial edges of the two crown end bearing surfaces 2, 4 are each angularly spaced by 30° from said intersection so that they lie within the contact area of a standard piston of similar dimensions. The lower bearing surface 3 extends 5° on either side of the intersection and thus also lies within this area.

As shown in Figure 2 there are ramps 16 each extending over 5° of the skirt circumference and leading up to the axially extending edges of each bearing surface, 2, 3, 4, and longer ramps 17 leading up to the circumferential edges of each bearing surface 2, 3, 4. The length of the ramps 17 may be 8 mm to give a slope, relative to a notional cylindrical surface co-axial with the piston axis, of between 0.2° and 1°. Thus, each bearing surface, including the slopes, has a substantially trapezoidal cross-section. The surface of each bearing surface is curved and is spaced 25 microns radially outwardly of the rest of the skirt thrust portions 14 although this distance may be less or, for example, up to 125 microns.

In the embodiment of Figure 2, there are, in the two skirt thrust portions 14 together, a total of four bearing surfaces towards the crown end of the piston 11 and two bearing surfaces towards the lower end of the skirt. The contact area of the bearing surfaces 2, 3, 4 on each skirt thrust portion is 8% of the contact area of a standard piston of similar dimensions. The bearing surfaces may be arcuate in shape but not necessarily so, and part elliptical surfaces may be appropriate. If the bearing surfaces are arcuate they need not have the same centre as the piston, assuming it to be cylindrical. The lines of intersection of the bearing surfaces and planes including the piston axis may be straight or curved.

There may, as described above, be an equal number of bearing surfaces formed on both thrust portions of the piston or the bearing surfaces may be arranged so that there are more or a greater bearing surface area on one thrust portion than on the other. For example, there may be more bearing surfaces or a greater bearing surface area on the skirt major thrust portion than on the skirt minor thrust portion.

In use, the piston 11 is mounted on a connecting rod in the cylinder or liner of an engine and reciprocates. The bearing surfaces contact the cylinder or liner to transmit the thrust from the connecting rod to the engine block and to guide the piston in its reciprocation. The bearing surfaces 2, 3, 4 are within the contact area of a standard piston of corresponding dimensions and so they react to the lateral thrust on the piston. Since the two crown end bearing surfaces 2, 4 are circumferentially spaced rather than at the centre of the skirt thrust portion, they reduce the tendency of the skirt to distort under the influence of the thrust forces. The lower bearing surface 3 is smaller in area than the combined area of the crown end bearing surfaces 2, 4 because the forces acting on the lower part of the skirt are less than the forces on the crown end of the skirt. Thus the thrust forces are satisfactorily transmitted.

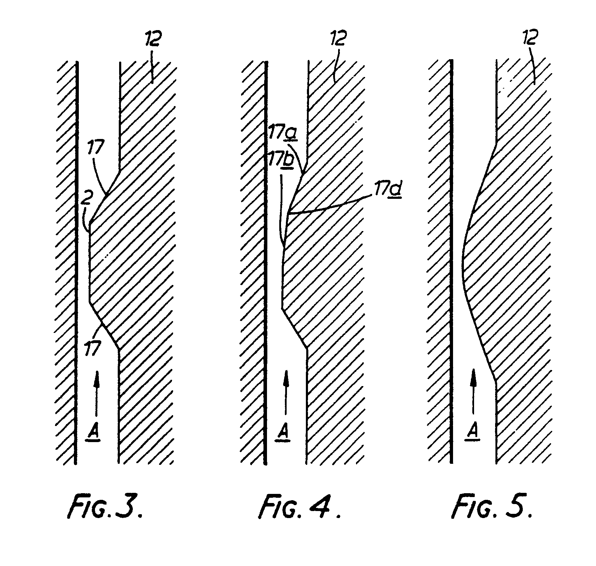

In addition, adequate hydrodynamic lubrication of the bearing surfaces 2, 3, 4 is encouraged by the ramp and skirt formations provided around the bearing surfaces as best seen in Figure 3, in which the direction of reciprocation of the piston is indicated by the arrow A. The ramps leading to the circumferential edges of the bearing surfaces maintain a satisfactory oil film on the bearing surfaces 2, 3, 4 despite the tendency of the reduced area of contact otherwise to reduce the thickness of the oil film below a workable minimum. The shallow slope of the ramps, not exceeding 1°, forms, with the associated cylinder or liner, a gradually narrowing passage for oil which is dynamically guided onto the bearing surfaces 2, 3, 4. The oil flows over the bearing surfaces before returning to the space between the cylinder or liner and the remainder of the skirt portion surrounding the bearing surfaces.

The radial spacing of the bearing surfaces from the skirt thrust portions (preferably between 125 microns and 25 microns) is sufficiently small to allow oil to be retained in these regions during the reciprocation of the piston and to give momentary oil pressurisation during incidences of piston slope which, it is believed, may provide forced lubrication of the bearing surfaces. In addition, the gap between the crown end bearing surfaces 2, 4 allows oil to reach the lower bearing surface 3 during a compression stroke so that the lower bearing surface 3 receives adequate oil during this stroke. An opposite effect occurs during the expansion stroke when oil is not prevented from reaching the crown end surfaces 2, 4.

Thus a reduction in contact area is achieved with a corresponding reduction in the frictional forces but without a detrimental reduction in thickness of the lubricating film.

When a piston is mounted in an engine or motor, it is attached to a connecting rod by a gudgeon pin. Because the piston is not an exact fit in the associated cylinder or liner, it can pivot about the gudgeon pin and thus alter the orientation of the ramps and bearing surfaces relatively to the cylinder or liner. In addition, the piston and the associated cylinder or liner will also expand as the engine or motor starts from and reaches operating temperatures. This will also alter the orientation of the ramps and bearing surfaces relatively to the associated cylinder or liner.

Such alterations will alter the dimensions of the passage formed between the ramps and the cylinder or liner and may affect adversely the lubrication of the associated bearing surface. In an attempt to overcome such possible problems, the cross-section of the bearing surfaces may be altered to the shapes shown in Figures 4 or 5.

In Figure 4, the ramp leading up to one circumferential edge of each bearing surface is formed of two mutually inclined sections 17a, 17b. The first section 17a provides a passage for hydrodynamic lubrication for one relative orientation of the ramp and the cylinder or liner while the second section 17b provides such a passage when there is an alternative orientation.

In Figure 5, the number of change points is infinite with the ramp 17 being convexly curved. This allows a hydrodynamic lubrication to be achieved under all conditions. In this embodiment, the bearing surface is also curved. Since a bearing surface of the kind shown in Figure 3 will eventually wear to the shape of the surface in Figure 5, the shape of Figure 5 anticipates this wear.

The arrangement of the bearing surfaces themselves in Figure 2, their relation to one another and their relation to the surrounding skirt thrust portion can produce improvements in engine performance. For example, four pistons 11 fitted in an engine of 1275 cm³ have given the following improvements in comparison with the use of standard pistons of the same dimensions :

Power-No significant improvement

Fuel consumption-Reduction by up to 3.5% improvement at full load

Friction-Reduction by about 1% at 2,500 r.p.m., road load.

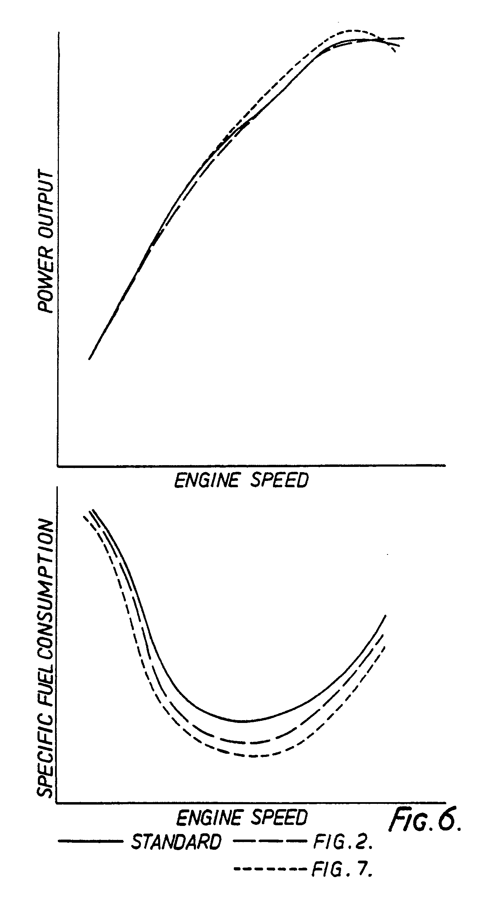

These results are shown graphically in Figure 6 with the results for the standard piston being shown in continuous line and the results for the piston of Figure 2 being shown in broken line.

Referring next to Figure 7, the second piston 20 shown therein is, in general, similar to the piston 11 described above with reference to Figure 1. In the piston of Figure 3 there are two crown end bearing surfaces 6, 7 on each skirt portion equally spaced on opposite sides of the intersection of the skirt with a plane including the piston axis and normal to the axis of the gudgeon pin hole 13. In addition, there are three lower bearing surfaces 8, 9, 10 on each skirt thrust portion with the central surface 9 symmetrical about said intersection and the outer surfaces 8, 10 equally spaced on opposite sides of said intersection. The bearing surfaces are all rectangular in shape with their longer dimension extending circumferentially. The outer axial edges of the upper pair of bearing surfaces 6 and 7 are each angularly spaced by 40° from said intersection so that they lie mostly within the contact area of a standard piston of similar dimensions. There are two ramps 21 and 24 each extending over 5° of the skirt circumference and leading up to the outer axially extending edges of the bearing surfaces 6 and 7, and two ramps 22 and 23 each extending over 10° of the skirt circumference and leading up to the inner axially extending edges of the bearing surfaces 6 and 7. The bearing surfaces 6, 7 each have an arcuate length of 25°.

The lower bearing surfaces have symmetrical ramps 25 which extend on either side of the bearing surfaces over 5° of the skirt circumference. The centre bearing surface 9 is of greater arcuate length than the other two 8 and 10 so that it extends circumferentially over most of the gap between the crown end bearing surfaces 6, 7. The outer axial edges of the bearing surfaces 8 and 10 are each angularly spaced by 40° from the said intersection. The lower corners of the two outer lower bearing surfaces 8, 10 are removed because of the shape of the skirt in the example shown, but would not be removed in the other examples.

The circumferential extent of the upper set of bearing surfaces need not however be the same as the circumferential extent of the lower set of bearing surfaces. As with the piston of Figure 2, the number, arrangement or area of the bearing surfaces on the skirt major thrust portion may be different from those of the bearing surfaces on the skirt minor thrust portion. In general, however, the majority of the area of the bearing surfaces lies within the contact area of a standard piston of similar dimensions.

As seen in Figure 7, ramps 26 lead up to the circumferential edges of each of the bearing surfaces 6, 7, 8, 9, 10. The axial length of the ramps 26 may be approximately 5 mm to give a slope relative to the remainder of the skirt of between 0.3° and 1.5°.

The contact area of the thrust surfaces 6, 7, 8, 9, 10 on each skirt portion 14 is 25% of the contact area of a standard piston of similar dimensions. The spacing of the bearing surfaces radially outwardly on the associated skirt portion 14 is 25 microns, although this may be less or, for example, up to 125 microns.

The piston of Figure 7 operates in generally the same way as the piston of Figure 2 with the same load transmitting and the same hydrodynamic lubrication characteristics provided by the formations around the bearing surfaces.

The fact that the bearing surfaces 6, 7, 8, 9, 10 are longer circumferentially than axially improves the lubrication, since most of the oil forced up to a circumferential edge of a bearing surface from a ramp 26 spreads over the surface and tends to leave the surface over the trailing circumferential edge. Where the axial dimension of the surface is longer than the circumferential dimension, much of the oil has left the surface circumferentially before it reaches the trailing edge, and so parts of the surface can be inadequately lubricated. In the piston of Figure 2, however, the axial length is sufficiently short to ensure that only a relatively small proportion of the oil leaves the sides so that sufficient oil reaches the trailing edges of the surfaces. In addition, the positioning of the central lower bearing surface of the piston of Figure 7 between the crown end bearing surfaces ensures that contact with the cylinder or liner occurs over the whole circumferential extent of the skirt thrust portion 14.

This piston thus also features a reduction in the contact area with the consequent reduction in frictional forces, while maintaining adequate lubrication of the contact surfaces is maintained.

This arrangement of the bearing surfaces themselves, their relation to one another and their relation to the surrounding skirt thrust portion can produce improvements in engine performance. For example, four pistons of the kind shown in Figure 7 fitted in an engine of 1275 cm² have given the following improvements in comparison with the use of standard pistons of the same general dimensions :

Power-up to 3.6% improvement

Fuel consumption-up to 5% improvement at full load

Friction-Reduction by about 3% at 2500 r.p.m., road load.

These results are shown graphically in Figure 6 (in chain dotted line) in comparison with a standard piston (in continuous line).

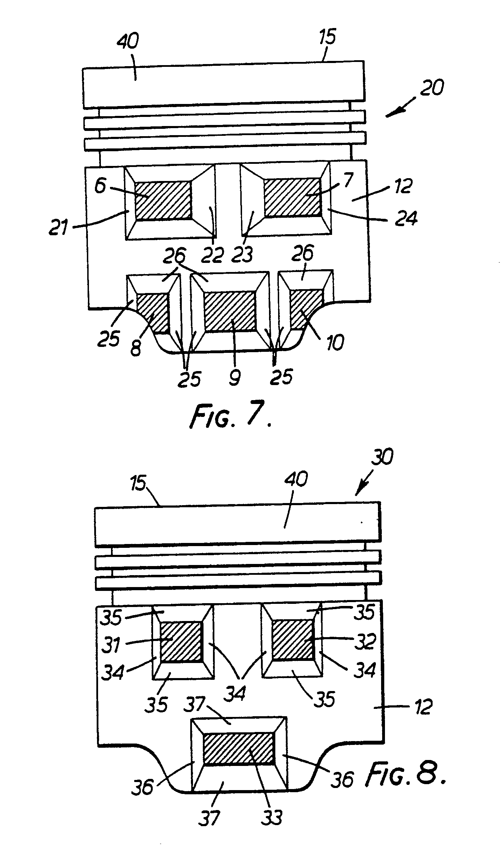

Referring next to Figure 8, the third piston 30 is, in general, similar to the piston of Figure 1. Three bearing surfaces 31, 32, 33 are provided on each side of the piston, two bearing surfaces 31, 32 near the crown end of the skirt and one lower bearing surface 33 near the lower end of the skirt. The two crown end bearing surfaces 31, 32 are rectangular with their longer dimension extending circumferentially. Each of these bearing surfaces has a circumferential length of 20° and extends to 35° from the intersection of the skirt with a plane including the piston axis and normal to the axis of the gudgeon pin hole 13. The axial edges have ramps 34 leading up to them whose circumferential length is 10°. There are also ramps 35 leading to the circumferential edges whose axial length may be 4 mm, to give a slope relative to the remainder of the skirt of between 0.4° and 1.5°.

The lower bearing surface 33 is also rectangular with its greater dimension in the circumferential direction. This surface is positioned so that its circumferential length is equal to the circumferential gap between the crown end bearing surfaces 31, 32. The area of the surface 33 is greater than the area of either of the crown end surfaces 31, 32, but is less than their combined area. For example, the bearing surface 33 may be 0.75 × the combined crown end bearing surface areas. This lower bearing surface 33 is provided with ramps 36 which lead to its axial edges and which extend circumferentially for 10° and ramps 37 leading to its circumferential edges. The axial length of the upper ramp 37 may be 4 mm to give a slope relative to the remainder of the skirt of between 0.4° and 1.5°. The lower ramp 37 may extend to the lower edge of the skirt with a slope lower than that of the upper ramp 37.

The contact area of the three thrust surfaces may be $D^2/11.5$ where D is the nominal diameter of the piston. Thus the contact area is only 25% of the contact area of a standard piston of similar dimensions. In addition, the bearing surfaces are spaced radially outwardly of the skirt thrust portion by no more than 125 microns and no less than 25 microns. The skirt may be further reduced in diameter beyond the axial edges of the crown end bearing surfaces 31, 32 to prevent side contact of the piston with the cylinder or liner for any reason, including piston tilt.

The piston of Figure 8 operates in generally the same way as the pistons of Figures 2 and 4 with similar load bearing and hydrodynamic lubrication characteristics. The circumferentially elongate shape of the bearing surfaces and the shape of the ramps ensures satisfactory lubrication and the overlap between the lower bearing surface 33 and the crown end bearing surfaces ensures that contact with the cylinder or liner occurs over the whole circumferential extent of the skirt thrust portion 14.

This piston thus also features a reduction in the contact area with the consequent reduction in frictional forces, while adequate lubrication of the contact surfaces is maintained.

This arrangement of the bearing surfaces themselves, their relation to one another and their relation to the surrounding skirt thrust portion can produce improvements in engine performance similar to those produced by the piston in Figure 7.

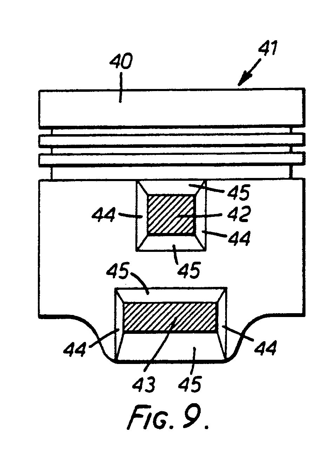

Referring next to Figure 9, the fourth piston 41 includes only two bearing surfaces 42, 43 on each side of the piston. The two bearing surfaces 42, 43 are axially spaced and are both symmetrically spaced around the intersection with the skirt of a plane including the piston axis and normal to the axis of the gudgeon pin hole 13. Both bearing surfaces 42, 43 are rectangular in shape with the longer edges extending circumferentially. The crown end bearing surface 42 is of smaller area than the lower bearing surface 43 with a circumferential extent of 20° compared to a circumferential extent of 40° for the lower bearing surface 43. These surfaces thus lie within the contact area of a standard piston of similar dimensions.

Both bearing surfaces 42, 43 are provided with ramps 44, leading up to their axial edges, whose angular extent is 10°. Ramps 45 are also provided, leading up to the circumferential edges of the crown end bearing surface 42 and the upper circumferential edge of the lower bearing surface 43, whose slope relative to the remainder of the skirt is between 0.4° and 1.5°. A ramp 45 leading up to the lower circumferential edge of the lower bearing surface 43 may extend to the lower edge of the skirt with a slope lower than that of the other ramps 45.

The bearing surfaces 42, 43 are spaced radially outwardly of the surrounding skirt 15 by no more than 125 microns and no less than 25 microns. The contact area of the bearing surfaces 42, 43 is about 18% of the contact area of a standard piston of similar dimensions.

The piston of Figure 9 operates in generally the same way as the pistons of Figures 2, 4 and 5 with similar load bearing and hydrodynamic lubrication characteristics. The depth of the spacing of the bearing surfaces 42, 43 from the surrounding skirt 15, the circumferentially elongate shape of the bearing surfaces and the shallow angle of the ramps all ensure that the bearing surfaces are satisfactorily lubricated. The reduced area of the bearing surfaces 42, 43 reduces the piston frictional forces and thus makes possible an increase in power output and a decrease in fuel consumption.

It will be appreciated from the above exemplary embodiments with reference to the drawings that the bearing surfaces may be arranged on the skirt thrust portions in any suitable way. A large number of smaller bearing surfaces may be used instead of a small number of larger bearing surfaces. The number and/or arrangement and/or area of the bearing surfaces may be different on the skirt major and minor thrust portions. In addition, the face of each bearing surface may be of any convenient shape whether curved or otherwise. The area of the bearing surfaces may vary between 0.05 and 0.95 $D^2/9$, where D is the nominal diameter of the piston.

For example, there may be a lesser number of bearing surfaces at the crown end and a greater number at the lower end. In addition, there may be a bearing surface or surfaces in the region of the ring belt 40.

It will be appreciated that ramps of shallow angle and spacing of a bearing surface from the surrounding skirt by less than 125 microns may be applied to any discrete bearing surface that is spaced radially outwardly of a surrounding skirt to encourage hydrodynamic lubrication of the bearing surface. It will also be appreciated that those portions of the surrounding skirt which are remote from the bearing surfaces may be removed to reduce the weight of the piston.

## Claims

1. A piston for an internal combustion engine of the kind comprising a crown (15), a gudgeon pin bore (13), a ring band (40) extending around the crown and including compression and oil control rings, two skirt portions (12) lying on opposite sides of a plane including the piston axis and the gudgeon pin bore axis, and at least one bearing surface (2, 3, 4, Fig 2 ; 6, 7, 8, 9, 10, Fig 7 ; 31, 32, 33, Fig 8 ; 42, 43, Fig 9) provided on each skirt portion (12), spaced radially outwardly from said surface (12), and portions on said at least one bearing surface for forming a lubricating film on said at least one bearing surface characterized in that said at least one bearing surface (2, 3, 4, Fig 2 ; 6, 7, 8, 9, 10, Fig 7 ; 31, 32, 33, Fig 8 ; 42, 43, Fig 9) is formed with said skirt portion (12) and is surrounded by the associated skirt portion (12), said radial outward spacing being less than 125 microns, said portions being hydrodynamic ramps (17, Fig 2 ; 26, Fig 7 ; 35, 37, Fig 8 ; 45, Fig 9) having a ramp angle of less than 1.5° extending between the skirt and said at least one bearing surface to maintain a pressurized oil film between said at least one bearing surface and the associated cylinder, so that sliding contact between the skirt and the associated cylinder is confined to said at least one bearing surface.

2. A piston according to claim 1 characterised in that at least three bearing surfaces (2, 3, 4 ; 6, 7, 8, 9, 10 ; 31, 32, 33) are provided on each skirt portion (12), two (2, 4 ; 6, 7 ; 31, 32) of said at least three bearing surfaces being towards the piston crown (40) and being spaced while at least one remaining bearing surface (3 ; 8, 9, 10 ; 33) is towards the lower edge of the skirt (12) opposite the space between the crown end bearing surfaces.

3. A piston for an internal combustion engine of the kind comprising a crown (15), a gudgeon pin bore (13), a ring band (40) extending around the crown and including compression and oil control rings, two skirt portions (12) lying on opposite sides of a plane including the piston axis and the gudgeon pin bore axis and at least one bearing surface (2, 3, 4, Fig 2 ; 6, 7, 8, 9, 10, Fig 7 ; 31, 32, 33, Fig 8 ;) provided on each skirt portion (12) spaced radially outwardly from said surface and including portions for forming a lubricating film on said at least one bearing surface characterised in that at least three bearing surfaces (2, 3, 4 ; 6, 7, 8, 9, 10 ; 31, 32, 33) are formed with each skirt portion (12), two (2, 4 ; 6, 7 ; 31, 32) of said at least three bearing surfaces being towards the piston crown (40) and being spaced, while at least one remaining bearing surface (3 ; 8, 9, 10 ; 33) is towards the lower edge of the skirt (12) opposite the space between the crown end surfaces said at least three bearing surfaces being spaced radially outwardly of, and surrounded by, the associated skirt portion (12), there being provided hydrodynamic ramps (17, Fig 2 ; 26, Fig 7 ; 35, 37, Fig 8) extending between the skirt and each said bearing surface to maintain a pressurized oil film between said at least three bearing surfaces and the associated cylinder, so that sliding contact between the skirt and the associated cylinder is confined to said at least three bearing surfaces.

4. A piston according to claim 3, characterized in that the angle of each ramp is less than 1.5 degrees.

5. A piston according to claim 3 or claim 4 characterized in that the radial outward spacing of each bearing surface (2, 3, 4 ; 6, 7, 8, 9, 10 ; 31, 32 ;) less than 125 microns from the associated skirt portion (12).

6. A piston according to any one of claims 2 to 5, characterized in that the circumferential spacing between the two crown-end bearing surfaces is at least as great as the circumferential length of the remaining bearing surface, a single remaining bearing surface being provided and being disposed between said crown end bearing surfaces.

7. A piston according to any one of claims 1 to 6, characterised in that, in the direction of movement of the piston (11), each ramp includes a surface having two plane portions (17a, 17b, Fig 4) which are inclined towards each other.

8. A piston according to any one of claims 1 to 7, characterised in that each ramp surface is curved (Fig 5) in the direction of movement of the piston (11).

9. A piston according to any one of claims 1 to 8, characterised in that each bearing surface (2, 3, 4 ; 6, 7, 8, 9, 10 ; 31, 32, 33 ; 42, 43) is spaced radially by more than 25 microns from the associated surrounding skirt portion (12).

10. A piston according to any one of claims 1 to 9, characterised in that the or each bearing surface (2, 3, 4 ; 6, 7, 8, 9, 10 ; 31, 32, 33 ; 42, 43) is generally rectangular in shape.

11. A piston according to any one of claims 1 to 10 characterised in that the length of the or each bearing surface (6, 7, 9 ; 33 ; 42 ; 43) in an axial direction is smaller than the width of the or each bearing surface in a circumferential direction.

12. A piston according to any one of claims 2 to 6, characterised in that the two crown-end bearing surfaces have a larger area than the remaining bearing surface or surfaces.

13. A piston according to any one of claims 1 to 12, characterised in that the or each bearing surface is rectangular in shape and in that ramps (16 ; 21 -25 ; 34, 36, 44) extend from axially extending peripheral

EP 0 072 228 B2

edges of said at least one bearing surface to the associated skirt portion.

14. A piston according to claim 13, characterised in that each ramp extends circumferentially to an angular extent of 10 degrees.

15. A piston according to any one of claims 1 to 14 characterised in that the or each bearing surface lies in a zone which extends by not more than 30 degrees to either side of a plane including the piston axis and normal to the gudgeon pin bore axis.

16. A piston according to any one of claims 1 to 15, characterised in that the or each bearing surface is curved in planes including the piston axis.

## Revendications

1. Piston pour moteur à combustion interne du type comprenant une couronne (15), un alésage de tourillon de crosse (13), une bande annulaire (40) s'étendant autour de la couronne et comprenant des anneaux de compression et de graissage, deux portions de jupe (12) se trouvant sur des côtés opposés d'un plan comprenant l'axe du piston et l'axe de l'alésage de tourillon de crosse et au moins une surface de support (2, 3, 4, figure 2 ; 6, 7, 8, 9, 10, figure 7 ; 31, 32, 33, figure 8 ; 42, 43, figure 9) prévue sur chaque portion de jupe (12), espacée radialement vers l'extérieur de la surface (12), et des parties sur au moins la surface de support précitée pour former une pellicule de lubrification sur au moins cette surface de support, caractérisé en ce qu'au moins cette surface de support (2, 3, 4, figure 2 ; 6, 7, 8, 9, 10, figure 7 ; 31, 32, 33, figure 8 ; 42, 43, figure 9) comprend la portion de jupe (12) précitée et est entourée par la portion de jupe associée (12), l'espacement extérieur radial étant inférieur à 125 microns, les parties précitées étant constituées par des rampes hydrodynamiques (17, figure 2 ; 26, figure 7 ; 35, 37, figure 8 ; 45, figure 9) ayant un angle de rampe inférieur à 1,5° s'étendant entre la jupe et au moins la surface de support précitée pour maintenir une pellicule d'huile pressurisée entre au moins cette surface de support et le cylindre associé, de telle sorte que tout contact coulissant entre la jupe et le cylindre associé soit limité à au moins cette surface de support.

2. Piston suivant la revendication 1, caractérisé en ce qu'au moins trois surfaces de support (2, 3, 4 ; 6, 7, 8, 9, 10 ; 31, 32, 33) sont prévues sur chaque portion de jupe (12), deux (2, 4 ; 6, 7 ; 31, 32) d'au moins ces trois surfaces de support étant du côté de la couronne de piston (40) et étant espacées tandis qu'au moins la surface de support restante (3 ; 8, 9, 10 ; 33) est du côté du bord inférieur de la jupe (12) à l'opposé de l'espace entre les surfaces de support d'extrémité de couronne.

3. Piston pour moteur à combustion interne du type comprenant une couronne (15), un alésage de tourillon de crosse (13), une bande annulaire (40) s'étendant autour de la couronne et comprenant des anneaux de compression et de graissage, deux portions de jupe (12) se trouvant sur des côtés opposés d'un plan comprenant l'axe du piston et l'axe de l'alésage de tourillon de crosse et au moins une surface de support (2, 3, 4, figure 2 ; 6, 7, 8, 9, 10, figure 7 ; 31, 32, 33, figure 8) prévue sur chaque portion de jupe (12) espacée radialement vers l'extérieur de ladite surface et comprenant des parties pour former une pellicule de lubrification sur au moins cette surface de support, caractérisé en ce qu'au moins trois surfaces de support (2, 3, 4 ; 6, 7, 8, 9, 10 ; 31, 32, 33) comprennent chaque portion de jupe (12), deux (2, 4 ; 6, 7 ; 31, 32) d'au moins ces trois surfaces de support étant du côté de la couronne de piston (40) et étant espacées, tandis qu'au moins la surface de support restante (3 ; 8, 9, 10 ; 33) est du côté du bord inférieur de la jupe (12) à l'opposé de l'espace entre les surface d'extrémité de couronne, au moins ces trois surfaces de support étant espacées radialement à l'extérieur de la portion de jupe associée (12) et entourées par celle-ci, des rampes hydrodynamiques (17, figure 2 ; 26, figure 7 ; 35, 37, figure 8) étant prévues et s'étendant entre la jupe et chaque surface de support pour maintenir une pellicule d'huile pressurisée entre au moins les trois surfaces de support précitées et le cylindre associé, de telle sorte que tout contact coulissant entre la jupe et le cylindre associé soit limité à au moins ces trois surfaces de support.

4. Piston suivant la revendication 3, caractérisé en ce que l'angle de chaque rampe est inférieur à 1,5°.

5. Piston suivant l'une ou l'autre des revendications 3 et 4, caractérisé en ce que l'espacement extérieur radial de chaque surface de support (2, 3, 4 ; 6, 7, 8, 9, 10 ; 31, 32) est inférieur à 125 microns de la partie de jupe associée (12).

6. Piston suivant l'une quelconque des revendications 2 à 5, caractérisé en ce que l'espacement circonférentiel entre les deux surfaces de support d'extrémité de couronne est au moins aussi grand que la longueur circonférentielle de la surface de support restante, une seule surface de support restante étant prévue et étant disposée entre ces surfaces de support d'extrémité de couronne.

7. Piston suivant l'une quelconque des revendications 1 à 6, caractérisé en ce que, dans la direction de mouvement du piston (11), chaque rampe comprend une surface comportant deux parties planes (17a, 17b, figure 4), qui sont inclinées l'une vers l'autre.

9

8. Piston suivant l'une quelconque des revendications 1 à 7, caractérisé en ce que chaque surface de rampe est arrondie (figure 5) dans la direction de mouvement du piston (11).

9. Piston suivant l'une quelconque des revendications 1 à 8, caractérisé en ce que chaque surface de support (2, 3, 4 ; 6, 7, 8, 9, 10 ; 31, 32, 33 ; 42, 43) est espacée radialement de plus de 25 microns de la partie de jupe environnante associée (12).

10. Piston suivant l'une quelconque des revendications 1 à 9, caractérisé en ce que le ou chaque surface de support (2, 3, 4 ; 6, 7, 8, 9, 10 ; 31, 32, 33 ; 42, 43) est de forme sensiblement rectangulaire.

11. Piston suivant l'une quelconque des revendications 1 à 10, caractérisé en ce que la longueur de la ou chaque surface de support (6, 7, 9 ; 33 ; 42 ; 43) dans une direction axiale est plus petite que la largeur de la ou chaque surface de support dans une direction circonférentielle.

12. Piston suivant l'une quelconque des revendications 2 à 6, caractérisé en ce que les deux surfaces de support d'extrémité de couronne ont une superficie plus grande que la surface ou les surfaces de support restantes.

13. Piston suivant l'une quelconque des revendications 1 à 12, caractérisé en ce que la ou chaque surface de support est de forme rectangulaire et en ce que des rampes (16 ; 21-25 ; 34, 36, 44) partent de bords périphériques s'étendant axialement d'au moins la surface de support précitée vers la portion de jupe associée.

14. Piston suivant la revendication 13, caractérisé en ce que chaque rampe s'étend circonférentiellement d'un angle de 10°.

15. Piston suivant l'une quelconque des revendications 1 à 14, caractérisé en ce que la ou chaque surface de support se trouve dans une zone qui ne s'étend sur pas plus de 30° jusque chaque côté d'un plan comprenant l'axe du piston et perpendiculaire à l'axe de l'alésage du tourillon de crosse.

16. Piston suivant l'une quelconque des revendications 1 à 15, caractérisé en ce que la ou chaque surface de support est arrondie dans des plans comprenant l'axe du piston.


## Ansprüche

1. Ein Kolben für eine Verbrennungsmaschine von der Art, welcher eine Krone (15), eine Kolbenbolzenbohrung (13), ein sich um die Krone herum erstreckendes und Kompressions- und Ölabstreifringe enthaltendes Ringband (40), zwei Mantelabschnitte (12), die auf gegenüberliegenden Seiten einer Ebene, die die Kolbenachse und die Kolbenbolzenbohrungsachse enthält, liegen, und wenigstens eine Lageroberfläche (2, 3, 4, Fig. 2 ; 6, 7, 8, 9, 10, Fig. 7 ; 31, 32, 33, Fig. 8 ; 42, 43, Fig. 9), die auf jedem Mantelabschnitt (12) radial nach außen von der Oberfläche (12) beabstandet vorgesehen ist, und Abschnitte an der wenigstens einen Lageroberfläche zur Bildung eines Schmierfilms auf der wenigstens einen Lageroberfläche umfaßt, **dadurch gekennzeichnet**, daß die wenigstens eine Lageroberfläche (2, 3, 4, Fig. 2 ; 6, 7, 8, 9, 10, Fig. 7 ; 31, 32, 33, Fig. 8 ; 42, 43, Fig. 9) mit dem Mantelabschnitt (12) gebildet ist, und von dem zugehörigen Mantelabschnitt (12) angeben ist, wobei der Abstand radial nach außen kleiner als 125 μm ist, die Abschnitte hydrodynamische Rampen (17, Fig. 2 ; 26, Fig. 7 ; 35, 37, Fig. 8 ; 45, Fig. 9) sind, welche Rampenwinkel von weniger als 1,5° aufweisen und sich zwischen dem Mantel und der wenigstens einen Lageroberfläche erstrecken, um einen unter Druck stehenden Ölfilm zwischen der wenigstens einen Lageroberfläche und dem zugehörigen Zylinder aufrechtzuerhalten, so daß ein Gleitkontakt zwischen dem Mantel und dem zugehörigen Zylinder auf die wenigstens eine Lageroberfläche beschränkt ist.

2. Ein Kolben nach Anspruch 1, **dadurch gekennzeichnet**, daß wenigstens drei Lageroberflächen (2, 3, 4 ; 6, 7, 8, 9, 10 ; 31, 32, 33) auf jedem Mantelabschnitt (12) vorgesehen sind, wobei zwei (2, 4 ; 6, 7 ; 31, 32) von den wenigstens drei Lageroberflächen in Richtung zu der Kolbenkrone (40) und beabstandet angeordnet sind, während wenigstens eine verbleibende Lageroberfläche (3 ; 8, 9, 10 ; 33) in Richtung auf den unteren Rand des Mantels (12) gegenüberliegend zu dem Zwischenraum zwischen den Lageroberflächen am Kronenende angeordnet ist.

3. Ein Kolben für eine Verbrennungsmaschine von der Art, die eine Krone (15), eine Kolbenbolzenbohrung (13), ein sich um die Krone herum erstreckendes und Kompressions- und Ölabstreifringe enthaltendes Ringband (40), zwei Mantelabschnitte (12), die auf gegenüberliegenden Seiten einer Ebene liegen, welche die Kolbenachse und die Achse der Kolbenbolzenbohrung enthält, und wenigstens eine Lageroberfläche (2, 3, 4, Fig. 2 ; 6, 7, 8, 9, 10, Fig. 7 ; 31, 32, 33, Fig. 8), die auf jedem Mantelabschnitt (12) radial nach außen von der Oberfläche beabstandet vorgesehen ist, und Abschnitte zum Bilden eines Schmierfilms auf der wenigstens einen Lageroberfläche enthält, umfaßt, **dadurch gekennzeichnet**, daß wenigstens drei Lageroberflächen (2, 3, 4 ; 6, 7, 8, 9, 10 ; 31, 32, 33) mit jedem Mantelabschnitt (12) gebildet sind, zwei (2, 4 ; 6, 7 ; 31, 32) von den wenigstens drei Lageroberflächen zu der Kolbenkrone (40) hin angeordnet und beabstandet sind, während wenigstens eine verbleibende Lageroberfläche (3 ; 8, 9, 10 ; 33) in Richtung auf den unteren Rand des Mantelabschnitts (12) gegenüberliegend dem Zwischenraum zwischen den Oberflächen am Kronenende angeordnet sind, wobei die wenigstens drei Lageroberflächen radial nach außen beabstandet zu den zugehörigen Mantelabschnitten (12) und davon umgeben sind, und dort hydrodynamische Rampen (17, Fig. 2 ; 26, Fig. 7 ; 35, 37, Fig. 8) vorgesehen sind, die sich zwischen dem Mantel und jeder der Lageroberflächen erstrecken, um einen Drucköffilm zwischen den wenigstens drei Lageroberflächen und dem zugehörigen Zylinder aufrechtzuerhalten, so daß ein Gleitkontakt zwischen dem Mantel und dem zugehörigen Zylinder auf die wenigstens drei Lageroberflächen beschränkt ist.

4. Ein Kolben nach Anspruch 3, **dadurch gekennzeichnet,** daß der Rampenwinkel kleiner als 1,5° ist.

5. Ein Kolben nach Anspruch 3 oder 4, **dadurch gekennzeichnet,** daß der Abstand jeder Lageroberfläche (2, 3, 4 ; 6, 7, 8, 9, 10 ; 31, 32) radial nach außen von dem zugehörigen Mantelabschnitt (12) kleiner als 125 µm ist.

6. Ein Kolben nach wenigstens einem der Ansprüche 2 bis 5, **dadurch gekennzeichnet,** daß der Umfangsabstand zwischen den Lageroberflächen am Kronenende wenigstens so groß, wie die Umfangslänge der verbleibenden Lageroberfläche ist, wobei eine einzelne verbleibende Lageroberfläche vorgesehen und zwischen den Kronenendlageroberflächen angeordnet ist.

7. Ein Kolben nach wenigstens einem der Ansprüche 1 bis 6, **dadurch gekennzeichnet,** daß, in der Richtung der Bewegung des Kolbens (11), jede Rampe eine Oberfläche enthält, welche zwei ebene Abschnitte (17a, 17b, Fig. 4) aufweist, welche zueinander geneigt sind.

8. Ein Kolben nach wenigstens einem der Ansprüche 1 bis 7, **dadurch gekennzeichnet,** daß jede Rampenoberfläche in der Richtung der Bewegung des Kolbens (11) gekrümmt ist (Fig. 5).

9. Ein Kolben nach wenigstens einem der Ansprüche 1 bis 8, **dadurch gekennzeichnet,** daß Jede Lageroberfläche (2, 3, 4 ; 6, 7, 8, 9, 10 ; 31, 32, 33 ; 42, 43) radial um mehr als 25 µm von dem zugehörigen umgebenden Mantelabschnitt (12) beabstandet ist.

10. Ein Kolben nach wenigstesn einem der Ansprüche 1 bis 9, **dadurch gekennzeichnet,** daß die oder jede Lageroberfläche (2, 3, 4 ; 6, 7, 8, 9, 10 ; 31, 32, 33 ; 42, 43) in der Form im wesentlichen rechteckig ist.

11. Ein Kolben nach wenigstens einem der Ansprüche 1 bis 10, **dadurch gekennzeichnet,** daß die Länge der oder jeder Lageroberfläche (6, 7, 9 ; 33 ; 42 ; 43) in einer axialen Richtung kleiner als die Breite von der oder jeder Lageroberfläche in einer Umfangsrichtung ist.

12. Ein Kolben nach wenigstens einem der Ansprüche 2 bis 6, **dadurch gekennzeichnet,** daß die zwei Kronenendlageroberflächen eine größere Fläche als die verbleibende Lageroberfläche oder verbleibenden Oberflächen aufweist.

13. Ein Kolben nach wenigstens einem der Ansprüche 1 bis 12, **dadurch gekennzeichnet,** daß die oder jede Lageroberfläche in der Form rechteckig ist, und daß sich Rampen (16 ; 21 bis 25 ; 34, 36, 44) von sich axial erstreckenden peripheren Rändern der wenigstens eine Lageroberfläche zu dem zugehörigen Mantelabschnitt erstrecken.

14. Ein Kolben nach Anspruch 13, **dadurch gekennzeichnet,** daß jede Rampe sich bezüglich des Umfangs über einen Winkelbereich von 10° erstreckt.

15. Ein Kolben nach wenigstens einem der Ansprüche 1 bis 14, **dadurch gekennzeichnet,** daß die oder jede Lageroberfläche in einer Zone liegt, welche sich um nicht mehr als 30° nach beiden Seiten einer Ebene erstreckt, die die Kolbenachse und die Normale auf die Kolbenbolzenbohrungsachse enthält.

16. Ein Kolben nach wenigstens einem der Ansprüche 1 bis 15, **dadurch gekennzeichnet,** daß die oder jede Lageroberfläche in Ebenen, die die Kolbenachse enthalten, gkrümmt ist.

15    40

11

13

12    *FIG. I.*

14

15    40

11

2    17
4    17
16    16
12
16    17
17

16    3    *FIG. 2*

FIG. 3.

FIG. 4.

FIG. 5.

FIG. 6.

STANDARD ——— FIG. 2.
------- FIG. 7.

EP 0 072 228 B2

FIG. 7.

FIG. 8.

FIG. 9.